# FASCICULE DE BREVET EUROPEEN

(11) **EP 0 436 206 B1**
(45) Date de publication et mention de la délivrance du brevet: **04.05.1994**
(21) Numéro de dépôt: 90125162.9
(22) Date de dépôt: 21.12.1990
(51) Int. Cl.: B29D 30/34, B60C 9/02

(54) **Paire de crochets pour un appareil de fabrication d'un renforcement pour pneus**
Hakenpaar für eine Vorrichtung zur Herstellung einer Reifenverstärkung
Double hook mechanism for a tyre reinforcement making apparatus

(30) Priorité: 28.12.1989 FR 8917521
(43) Date de publication de la demande: 10.07.1991
(73) Titulaire: SEDEPRO, F-75015 Paris (FR)
(72) Inventeur: Mayet, Jean-Claude, F-63000 Clermont-Ferrand (FR); Dailliez, Olivier, F-63400 Chamalieres (FR)
(74) Mandataire: Bauvir, Jacques

(56) Documents cités:
- EP-A- 0 009 018
- EP-A- 0 243 851
- WO-A-83/02749
- DE-B- 1 291 112

## Description

La présente invention concerne la fabrication des pneumatiques. Elle se rapporte au type d'appareil décrit dans la demande de brevet EP 243 851.

Un tel appareil est destiné à la fabrication de renforcements pour pneumatiques à partir d'un seul fil. Parmi les organes essentiels, cet appareil comporte des moyens de retenue du fil, portés par des leviers désignés par le terme "bras de support" dans la demande de brevet EP 243 851. Cet appareil comporte aussi des moyens de présentation du fil aux moyens de retenue. Dans les exemples décrits, ces moyens de présentation sont constitués par un bras rotatif assurant le dévidage et l'accrochage de fil aux moyens de retenue ; les moyens de retenue du fil sont constitués par une paire de crochets et le dévidage du fil est assuré à partir d'un orifice situé à l'extrémité du bras rotatif.

Dans la première phase de fabrication, seul le premier crochet intervient pour assurer l'accrochage et la retenue du fil présenté par le bras rotatif. La position du second crochet est telle que chacun des deux tronçons de fil quittant le premier crochet soit disposé de part et d'autre du second crochet. Ce n'est que lors du rabattement des leviers que la pointe du second crochet accroche et retient l'un des deux tronçons de fil pour les écarter quelque peu l'un et l'autre de façon à pouvoir insérer une tringle.

Le but de la présente invention est de proposer un perfectionnement aux crochets assurant la retenue de fil, de façon à rendre plus fiable l'intervention du second crochet devant permettre l'ouverture de la boucle nécessaire pour l'insertion d'une tringle. Il faut garantir que le second crochet prenne toujours un et un seul fil pour que le pneumatique réalisé soit toujours d'aussi bonne qualité que possible. A cette fin, il est proposé que, dès la première phase de fabrication (accrochage du fil présenté par le bras rotatif), l'accrochage du fil ait lieu sur chacun des deux crochets solidaires d'un levier.

Selon l'invention, l'appareil de fabrication d'un renforcement pour pneumatiques, ledit renforcement étant constitué à partir d'un seul fil, ledit appareil étant du type comportant deux couronnes coaxiales de leviers dont l'extrémité porte une paire de crochets pour retenir le fil, et comportant des moyens de présentation du fil aux crochets, lesdits leviers pouvant être déplacés entre une position d'accrochage aux crochets et une position de décrochage, est caractérisé en ce que le premier crochet est monté fixe sur le levier, et le second est monté mobile par rapport au premier crochet.

Grâce à cela, on maîtrise la position relative de chacun des crochets en tout point de la trajectoire, en particulier à l'accrochage et au décrochage, et il est plus facile de conformer et de disposer les crochets pour optimiser à la fois l'accrochage du fil et le décrochage ultérieur des crochets lorsque le fil est ancré à une tringle. La boucle peut être créée dès le départ, c'est-à-dire dès l'accrochage du fil aux crochets, et elle se conserve pendant toute la phase de rabattement autour du noyau.

L'invention propose aussi une paire de crochets dont l'un est articulé sur l'autre, de façon à pouvoir rendre un crochet mobile par rapport à l'autre.

L'invention propose également un organe de commande de la position des seconds crochets, utilisant le basculement de ceux-ci autour d'un point d'articulation, qui est particulièrement adapté à la commande de la position de l'extrémité des leviers fonctionnant comme explicité dans la demande de brevet précitée.

Pour la connaissance du principe de fabrication mis en oeuvre dans la présente invention, ainsi que pour la configuration générale de l'appareil de fabrication, il convient de se reporter à la demande de brevet EP 243 851 précitée, de même que pour la description de tous les moyens non spécifiques de la présente invention.

Les figures suivantes, consultées en liaison avec la suite de la description, permettent de bien comprendre l'invention.

La figure 1 montre une paire de crochets à différents stades de la fabrication d'un renforcement.

La figure 2 montre un détail d'un organe de la machine.

La figure 3 illustre un autre stade de la fabrication.

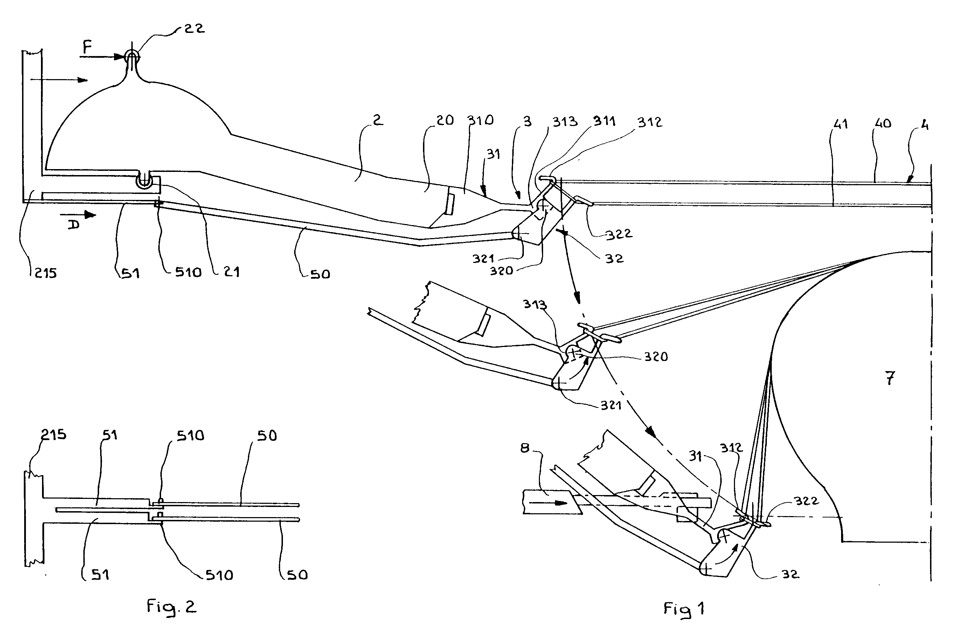

Les organes essentiels de l'appareil sont symétriques par rapport au plan perpendiculaire à l'axe de rotation, situé au milieu du noyau 7 ; c'est pourquoi la figure 1 n'en montre qu'une moitié. On reconnait un levier 2 basculant autour du pivot 21, et portant à son extrémité 20 une paire de crochets 3. La présente invention reprend le principe connu du rabattement du renforcement sur et autour du noyau 7, par un déplacement simultané de tous les pivots 21 vers le noyau combiné à une rotation des leviers 2 autour des pivots 21.

Comme connu par la demande de brevet précitée, on obtient cela en imposant le déplacement D des pivots 21, tout en maintenant une poussée adéquate F sur les poussoirs 22.

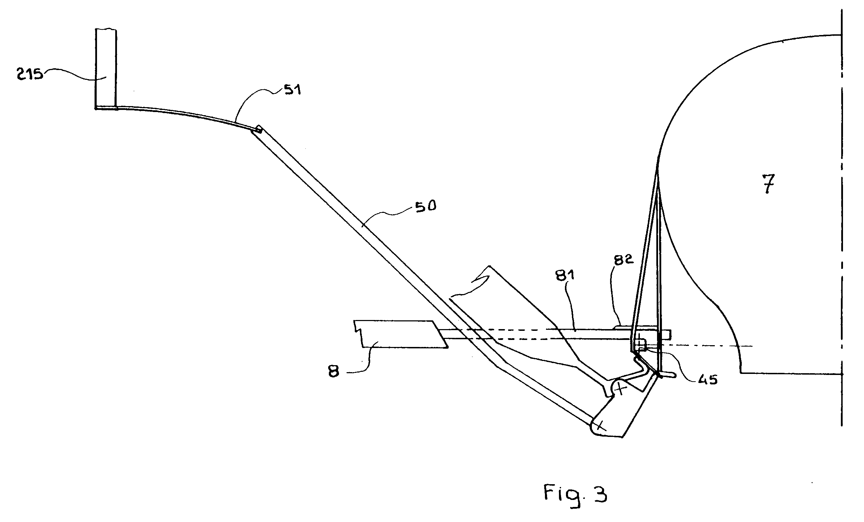

La paire 3 de crochets est constituée des crochets 31 et 32. Le premier crochet 31 comporte une base 310 adaptée pour être fixée à l'extrémité 20 du levier 2. Ensuite, on trouve un segment de déport 311, puis une pointe 312, dirigée vers la base, et inclinée par rapport au plan défini par la base et le segment de déport 311. La base 310 et le segment de déport 311 définissent un plan correspondant au plan dans lequel s'inscrit le mouvement de l'extrémité 20 des leviers 2. Aux figures 1 et 3, cela correspond au plan de la feuille. La pointe 312 sort donc légèrement du plan de la feuille.

Le premier crochet 31 comporte encore une patte 313 sur laquelle le second crochet 32 est fixé par une articulation 320. Le second crochet 32 comporte, d'un côté de l'articulation 320, un point de commande 321 pour déterminer sa position, et de l'autre côté de l'articulation 320, une pointe 322 dirigée du côté opposé à la base 312 du premier crochet 31, et inclinée par rapport au même plan défini ci-dessus, du même côté que la pointe 312 du premier crochet 31.

La première phase de fabrication d'un renforcement consiste à accrocher le fil 4 aux deux couronnes de crochets. Toutes les considérations exposées dans la demande de brevet précitée, relatives à la présentation du fil 4 aux paires de crochets, et leurs implications sur la forme des crochets et leur position, le caractère interchangeable des crochets entre les couronnes de droite et de gauche restent valables. Une seule caractéristique est modifiée par la présente invention en phase d'accrochage du fil, le second crochet 32 est légèrement décalé radialement vers un rayon plus petit par rapport au premier 31. Plus précisément, celui des deux crochets situé axialement à l'intérieur est décalé radialement vers un rayon plus petit par rapport à l'autre crochet. Le but poursuivi est que, dès l'accrochage du fil 4 sur les crochets lors du dévidage, par exemple par le bras rotatif décrit dans le document précité, ou par tout moyen équivalent, le fil 4 s'appuie sur chacun des deux crochets 31 et 32 de chaque paire 3 de crochets, dans les deux couronnes de l'appareil.

Le crochet 32 est commandé en position par une barre 50 reliée par une articulation au point de commande 321 du crochet 32 d'un côté, et de l'autre côté, à une lame 51, également via un point d'articulation 510. Les axes de chacune de ces articulations disposées de part et d'autre (510 et 321) de la barre 50 et de l'articulation 320 du crochet 32 autorisent un mouvement dans le plan méridien. Chaque barre 50 est disposée sensiblement parallèlement au levier 2 associé, de telle façon que le point d'articulation 510 liant la barre 50 à la lame 51 soit au voisinage du pivot 21 du levier 2. On détermine la position exacte de ce point d'articulation 510 de façon à ce que, compte tenu de la position du pivot 21, de l'articulation 320, et du point de commande 321, lorsque le levier 2 passe de la position d'accrochage du fil 4 (position supérieure sur la figure 1) à la position d'insertion d'une tringle et de décrochage (position inférieure à la figure 1), le quadrilatère formé par 510, 21, 320, 321 se déforme sensiblement comme schématisé à la figure 1 par les positions respectives de 320 et 321.

Il y a donc un basculement du second crochet 32 dans le sens trigonométrique pour la couronne des crochets de gauche à la figure 1. L'écart entre les deux crochets 31 et 32 diminue. Les angles à la base des pointes, dans lesquels le fil 4 est retenu, tendent à se situer quasiment au même niveau radial, en fin de mouvement. Cela signifie que le tronçon de fil 4 qui va d'un crochet 31, à l'autre 32 tend à se placer parallèlement à l'axe du noyau 7.

La propriété la plus importante est la suivante : la position dans l'espace des crochets 31 et 32, notamment l'angle par rapport à l'axe de rotation, formé par les pointes 312 et 322 est favorable à la retenue de fil 4 aussi bien en position d'accrochage qu'en position de décrochage, tout en permettant un décrochage aisé par l'intervention du dispositif 8 utilisé lors de l'insertion d'une tringle 45, à la lumière de ce qui a été exposé dans la demande de brevet EP 243 851, à laquelle il faut se reporter pour assimiler cette phase de la fabrication du renforcement.

En consultant la figure 2, on voit que toutes les lames 51 sont solidaires du plateau 215. Le plateau 215 porte également tous les pivots 21. Il constitue donc le support de la couronne de leviers 2. Le plateau 215 constitue l'organe de commande des crochets articulés évoqué ci-dessus, et en même temps, il impose le mouvement axial des pivots 21 (déplacement D). Il en résulte que la rotation de crochet articulé 32 est simultanée avec le basculement du levier 2, lui-même permis grâce à la poussée F sur les poussoirs 22 provoquant une rotation des leviers 2 autour des pivots 21 lorsque l'on impose le déplacement D.

L'accrochage du fil 4 sur le crochet 32 provoque des contraintes de traction dans la barre 50 et la lame 51. A la figure 1, on voit que la lame 51 et la barre 50 sont sensiblement alignées. Dès lors, l'organe de commande de la position des crochets articulés assure un positionnement rigide des crochets 32 lorsque les leviers 2 sont en position d'accrochage, ce qui favorise un bon accrochage du fil 4. De même, la conception du crochet 31 le rend également suffisamment rigide face aux efforts provoqués par l'accrochage du fil 4.

Par contre, comme on le voit en consultant la figure 3, en position de décrochage, la barre 50 est inclinée par rapport à l'orientation initiale de la lame 51. Or le moment d'inertie à la flexion dans un plan méridien des lames 51 est suffisamment faible pour que ces leviers se déforment légèrement, élastiquement, notamment lorsque les premiers crochets 31 sont décrochés, ce qui correspond au stade de fabrication illustré par la figure 3.

Le dispositif 8 comporte un ensemble de tiges 81 et de doigts 82 qui fonctionnent tout à fait comme expliqué dans la demande de brevet EP 243 851 pour la variante concernant les crochets dont les pointes sont orientées en sens opposés. Il suffit donc de s'y reporter pour de plus amples détails.

L'appareil selon l'invention est conçu de façon à permettre l'accrochage de fil sur chaque paire de crochets, l'aller et le retour du fil vers et depuis chaque paire de crochets étant séparés par un espace, quand il est en position accrochage (voir partie supérieure de la figure 1). Et en position de décrochage, l'appareil est conçu pour faciliter le décrochage par la position du crochet articulé d'une part et par la souplesse élastique d'autre part.

## Revendications

1. Appareil de fabrication d'un renforcement pour pneumatiques, ledit renforcement étant constitué à partir d'un seul fil, ledit appareil étant du type comportant deux couronnes coaxiales de leviers (2) dont l'extrémité porte une paire (3) de crochets pour retenir le fil, et comportant des moyens de présentation du fil aux crochets, lesdits leviers pouvant être déplacés entre une position d'accrochage du fil auxdites paires (3) de crochets et une position de décrochage, caractérisé en ce que le premier crochet est monté fixe sur le levier, et le second est monté mobile par rapport au premier crochet.

2. Appareil selon la revendication 1, caractérisé en ce que l'appareil comporte un organe de commande de la position du second crochet.

3. Appareil selon la revendication 2, caractérisé en ce que ledit organe de commande assure un positionnement rigide du second crochet lorsque lesdits leviers (2) sont en position d'accrochage du fil et assure un positionnement plus souple du crochet mobile en position de décrochage.

4. Appareil selon la revendication 1 ou 2, caractérisé en ce que ledit second crochet est articulé par rapport au premier crochet.

5. Appareil selon la revendication 4, caractérisé en ce que l'organe de commande de la position du second crochet articulé comporte une barre disposée sensiblement parallèlement au levier, articulée d'un côté sur le crochet articulé, et reliée de l'autre côté audit organe de commande de la position du crochet articulé.

6. Paire (3) de crochets pour un appareil de fabrication d'un renforcement pour pneumatiques, ledit renforcement étant constitué à partir d'un seul fil, ledit appareil étant du type comportant deux couronnes coaxiales de leviers (2), caractérisé en ce que le premier crochet (31) comporte une base (310) adaptée pour être fixée à l'extrémité (20) du levier (2), puis un segment de déport (311), puis une pointe (312) dirigée vers la base, et inclinée par rapport au plan défini par la base et le segment de déport, et en ce que le premier crochet (31) comporte une patte (313) sur laquelle le second crochet (32) est fixé par une articulation (320), ledit second crochet (32) comportant d'un côté de l'articulation un point (321) de commande de sa position, et de l'autre côté de l'articulation (320) une pointe (322) dirigée du côté opposé à ladite base, et inclinée par rapport audit plan défini par la base (310) et le segment de déport (311) du même côté que la pointe du premier crochet.

## Claims

1. Apparatus for the manufacture of a reinforcement for tires, said reinforcement being formed from a single cord, said apparatus being of the type having two coaxial rings of levers (2) the end of which bears a pair (3) of hooks to retain the cord and comprising means for the presentation of the cord to the hooks, the said levers being capable of displacement between a position of hooking of the cord to the said pairs (3) of hooks an unhooking position, characterized by the fact that the first hook is mounted fixed on the lever and the second is mounted moveable with respect to the first hook.

2. An apparatus according to Claim 1, characterized by the fact that the apparatus comprises a control member for the position of the second hook.

3. An apparatus according to Claim 2, characterized by the fact that said control member assures a rigid positioning of the second hook when said levers (2) are in hooking position of the cord, and assures a more flexible positioning of the moveable hook in unhooking position.

4. An apparatus according to Claim 1 or 2, characterized by the fact that said second hook is articulated with respect to the first hook.

5. An apparatus according to Claim 4, characterized by the fact that the control member for the position of the second articulated hook comprises a bar arranged substantially parallel to the lever, articulated on one side on the articulated hook and connected on the other side to the said control member of the position of the articulated hook.

6. A pair (3) of hooks for an apparatus for the manufacture of a reinforcement for tires, said reinforcement being formed from a single cord, the said apparatus being of the type having two coaxial rings of levers (2), characterized by the fact that the first hook (31) has a base (310) adapted to be fastened to the end (20) of the lever (2), then an offset segment (311), then a point (312) directed towards the base and inclined with respect to the plane defined by the base and the offset segment, and by the fact that the first hook (31) comprises a lug (313) on which the second hook (32) is fastened by an articulation (320), the said second hook (32) having on one side of the articulation, a point (321) for the control of its position and the other side of the articulation (320), a point (322) directed from the side opposite said base (310) and inclined with respect to said plane defined by the base (310) and the offset segment (311) on the same side as the point of the first hook.

## Patentansprüche

1. Vorrichtung zum Herstellen einer Verstärkung für Luftreifen, wobei die Verstärkung ausgehend von einem einzigen Faden gebildet wird, wobei die Vorrichtung von der Art mit zwei koaxialen Hebelkränzen (2) ist, deren Ende ein Paar von Haken (3) zum Zurückhalten des Fadens aufweist, und Einrichtungen zum Präsentieren des Fadens den Haken vorgesehen sind, wobei die Hebel zwischen einer Anhängposition des Fadens an den Hakenpaaren (3) und einer Löseposition bewegt werden können, dadurch gekennzeichnet, daß der erste Haken fest an dem Hebel angeordnet ist, und der zweite bezüglich des ersten Hakens beweglich angeordnet ist.

2. Vorrichtung nach Anspruch 1, dadurch gekennzeichnet, daß die Vorrichtung ein Steuerungsorgan der Position des zweiten Hakens aufweist.

3. Vorrichtung nach Anspruch 2, dadurch gekennzeichnet, daß das Steuerungsorgan eine starre Positionierung des zweiten Hakens sicherstellt, wenn die Hebel (2) in Fadenanhängposition sind und eine nachgiebigere Stellung des beweglichen Hakens in Löseposition sicherstellt.

4. Vorrichtung nach Anspruch 1 oder 2, dadurch gekennzeichnet, daß der zweite Haken bezüglich des ersten Hakens gelenkig ist.

5. Vorrichtung nach Anspruch 4, dadurch gekennzeichnet, daß das Steuerungsorgan der Stellung des zweiten angelenkten Hakens eine Stange aufweist, die im wesentlichen parallel zum Hebel angeordnet ist, wobei sie auf der einen Seite an dem gelenkigen Haken angelenkt ist, und auf der anderen Seite mit dem Steuerungsorgan der Stellung des gelenkigen Hakens verbunden ist.

6. Hakenpaar (3) für eine Vorrichtung zum Herstellen einer Verstärkung für Luftreifen, wobei die Verstärkung aus einem einzigen Faden gebildet wird, wobei die Vorrichtung vom Typ mit zwei koaxialen Hebelkränzen (2) ist, dadurch gekennzeichnet, daß der ersten Haken (31) eine Basis (310) aufweist, die geeignet ist, am Ende (20) des Hebels (2) befestigt zu werden, sodann ein Versetzungssegment (311), eine Spitze (312), die zur Basis gerichtet ist, und bezüglich der Ebene geneigt ist, die durch die Basis und das Versetzungssegment definiert wird, aufweist, und daß der erste Haken (31) eine Lasche (313) aufweist, an der der zweite Haken (32) durch ein Gelenk (320) befestigt ist, wobei der zweite Haken (32) auf der einen Seite des Gelenks eine Spitze (321) zur Steuerung seiner Position, und auf der anderen Seite des Gelenks (320) eine Spitze (322) aufweist, die auf die der Basis gegenüberliegenden Seite gerichtet ist, und bezüglich der Ebene geneigt ist, die von der Basis (310) und dem Versetzungssegment (311) auf derselben Seite wie die Spitze des ersten Hakens definiert ist.
